# FASCICULE DE BREVET EUROPEEN

(11) **EP 3 317 186 B1**
(45) Date de publication et mention de la délivrance du brevet: **31.07.2019**
(21) Numéro de dépôt: 16741664.3
(22) Date de dépôt: 24.06.2016
(51) Int. Cl.: B65B 21/06, B65B 35/44, B65B 35/40, B65B 35/36, B65G 54/02, B65G 47/08, B65G 47/84

(54) **DISPOSITIF ET MÉTHODE DE CONSTITUTION DE LOTS**
VORRICHTUNG UND VERFAHREN ZUR FORMUNG VON CHARGEN
DEVICE AND METHOD FOR FORMING BATCHES

(30) Priorité: 30.06.2015 FR 1556108
(43) Date de publication de la demande: 09.05.2018
(73) Titulaire: C.E.R.M.E.X. CONSTRUCTIONS ETUDES ET RECHERCHES DE MATERIELS POUR L'EMBALLAGE D'EXPEDITION, 21910 Corcelles-Les-Cîteaux (FR)
(72) Inventeur: CHOPLIN, Gregory, 21910 Corcelles Les Cîteaux (FR)
(74) Mandataire: Sidel Group
(86) Numéro de dépôt international: PCT/FR2016/051553
(87) Numéro de publication internationale: WO 2017/001750

(56) Documents cités:
- EP-A1- 2 163 498
- DE-A1-102012 201 059
- US-A1- 2015 001 041

## Description

La présente invention relève du domaine du conditionnement de produits au sein d'une ligne industrielle de traitement à la chaine, et a pour objet, d'une part, un dispositif de conditionnement particulier, et, d'autre part, un procédé mettant en oeuvre ce dispositif.

Dans ce domaine, les produits du type flacon, bouteilles, ou autres contenants en particulier à base circulaire, circulent dans des postes de traitement successif, du type remplisseuse, étiquetteuse, boucheuse, qui permettent de fabriquer les produits à la chaîne. Une fois les produits terminés, ils passent par des postes servant au conditionnement sous forme de fardeau, c'est-à-dire de groupes de produits enrobés de film qui les transforme en un groupe autoporté et résistant et protégé pour le transport.

Il est donc nécessaire, avant l'enrobage par film plastique, d'agencer les produits de façon matricielle. De façon générale, les produits d'un même lot sont organisés en lignes et en colonnes de produits séparés et non imbriqués.

Pour former de tels lots, les produits, évoluant en amont dans une configuration en vrac, et donc en quinconce, sont séparés en colonnes non imbriquées grâce à des plaques délimitant des couloirs longitudinaux, comme dans EP2331433. Des espaces longitudinaux sont ensuite aménagés entre les produits pour former des lots consécutifs sur un tapis au niveau duquel ils sont ensuite enrobés de film. Le passage dans une enceinte de chauffage a ensuite pour effet de rétreindre le film et de serrer alors les produits les uns contre les autres.

En ce qui concerne la création de tronçons longitudinaux de produits, EP1560772 propose par exemple de faire circuler les produits depuis un couloir unifilaire en oblique par rapport au tapis final. US5235996 propose, quant à lui, un montage réceptionnant un flux accumulé en vrac, reposant sur un principe de lames verticales, mobiles longitudinalement, à l'entrée des couloirs. La transformation d'un flux en vrac en un flux à base de couloirs séparés crée toutefois des problèmes de coincement. US 2015/0001041 A1 divulgue en outre les caractéristiques du préambule de la revendication 1 ci-jointe.

Il existe donc dans l'état de la technique actuel un besoin pour une solution d'alimentation en produits sur un tapis de machine de conditionnement, qui soit fiable et évite les problèmes éventuels de coincements. En outre, cette solution d'alimentation doit être compatible avec des cadences élevées du module de conditionnement aval.

Pour ce faire, l'invention propose d'amener les produits au niveau du tapis à l'aide d'un système de moteur linéaire, qui garantit alors le référencement et la maîtrise des produits à l'unité, ces produits étant saisis depuis un poste en amont et amenés sur un tapis en aval depuis le côté, pour constituer les lots au fil de la progression du tapis.

L'invention a ainsi pour objet un dispositif de conditionnement de produits selon la revendication 1.

L'invention a aussi pour objet un procédé d'alimentation selon la revendication 8.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre une vue schématique d'une alimentation d'un tapis selon l'invention ;
- la figure 2 montre une réalisation où les produits sont transférés sur le tapis grâce à un moyen de transfert sous forme de moteur linéaire ;
- la figure 3 montre une autre réalisation où le moyen de transfert prend la forme de poussoirs montés sur glissière ;

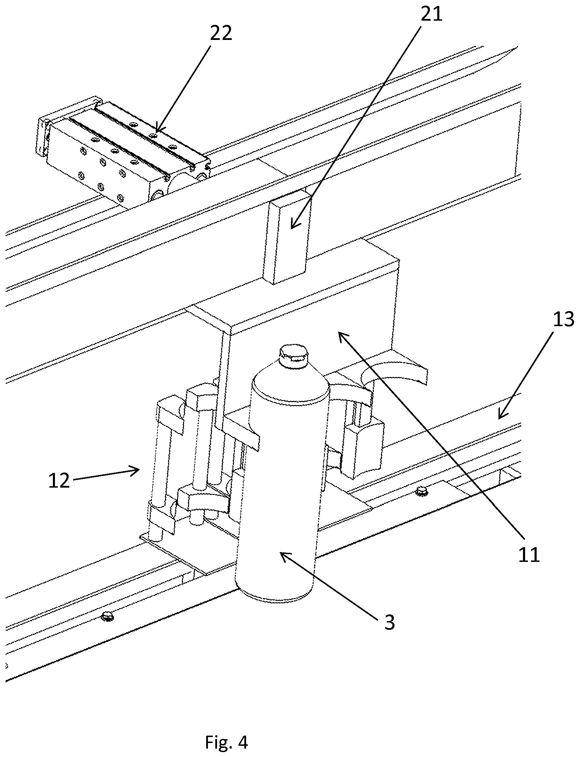

- les figures 4 et 5 montre un détail de coopération et montage entre la navette de déplacement et un poussoir ;
- la figure 6 schématise un cycle de dépose particulier.

L'invention a donc tout d'abord comme objet un dispositif de conditionnement 1 de produits 3, présentant, d'une part, un module de conditionnement 4 dans lequel les produits 3 en lots 5 sont conditionnés, notamment par fardelage ou par encaissage, et, d'autre part, un tapis 6 s'étendant dans une direction de convoyage 8 pour alimenter ledit module en lots 5 de produits 3, le dispositif comprenant, en outre, un moyen d'alimentation 7 qui amène les produits 3 sur le tapis 6 depuis un poste en amont du dispositif de conditionnement 1.

Les produits 3 sont préférablement du type flacon, bouteilles, ou autre contenant de liquide que le module de conditionnement 4 emballe à l'aide d'un film correspondant pour obtenir un fardeau autoporté, dans lequel les produits 3 sont agencés en lot 5. Dans d'autres applications, les produits 3 en lot 5 sont saisis et directement placés dans un contenant du type caisse. Les lots 5 sont formés, chacun, d'au moins une rangée 24, transversale à la direction de convoyage 8, et d'au moins une colonne 16 longitudinale, dans le sens de la direction de convoyage 8. Les produits 3 dans un lot 5 peuvent être quinconcés.

Le moyen d'alimentation 7 sert à saisir les produits 3 depuis une étape amont de fabrication de produit 3 et à les déposer ensuite sur le tapis 6. L'étape de fabrication amont peut se terminer par un étiquetage ou un bouchage du produit 3. Comme il sera décrit ci-dessous, les produits 3 sont agencés en lot 2 à l'occasion de leur dépose sur le tapis 6 par le moyen d'alimentation 7.

Selon l'invention, le moyen d'alimentation 7 repose sur un principe de moteur linéaire et s'étend au moins partiellement dans au moins une zone latérale 9 que présente le dispositif de conditionnement 1, à côté du tapis 6.

De plus, le moyen d'alimentation 7, à partir de la au moins une zone latérale 9, dépose les produits 3 sur ledit tapis 6 depuis différentes parties de ladite zone réparties le long de la direction de convoyage 8, et préférablement, le dispositif de conditionnement 1 comprend, en outre, au moins un moyen de transfert 10 avec au moins un poussoir 11 mobile dans la direction de convoyage 8 et agissant transversalement à la direction de convoyage 8 pour déplacer les produits 3 depuis la au moins une zone latérale 9 jusque sur le tapis 6.

Un des avantages d'un moyen d'alimentation à base de moteur linéaire à navettes et rail est que la position des produits 3 est connue et référencée en permanence, depuis leur prise au poste en amont, ce qui permet notamment d'avoir une dépose précise sur le tapis 6. Le moteur linéaire du moyen d'alimentation 7 utilise donc un élément du type rail principal 13 sur lequel circulent des navettes 12, chaque navette 12 pouvant accueillir au moins un produit 3. Le moyen d'alimentation 7 a la particularité de déposer les produits 3 depuis le côté du tapis 6, à l'unité ou une rangée 24 à chaque fois. Il est ainsi possible de bénéficier de l'avance régulière du tapis 6 pour apporter, à des zones fixes différentes, des parties de lot 5 différentes, notamment une colonne 16 à chaque fois.

Le rail principal 13 du moyen d'alimentation 7 s'étend donc au niveau du poste en amont où il doit saisir les produits 3, ainsi que le long du tapis 6, sur son côté, dans une zone latérale 9 à partir de laquelle les produits 3 sont transférés transversalement. Les produits 3 sont transférés sur le tapis 6 depuis différentes parties de la zone latérale 9 qui sont réparties le long du mouvement d'avance du tapis 6, de sorte que chaque lot 5 se constitue au fil de sa progression vers le module de conditionnement 4. La cadence de formation de lot 5 est alors bien plus élevée qu'en déposant les produits 3 par rangées 24 transversales, au niveau de l'extrémité du tapis 6.

Le moyen de transfert 10 assure que les produits 3 passent du moyen d'alimentation 7 au tapis 6. Préférablement, le mouvement des produits 3 à l'occasion du transfert est, par rapport au tapis 6, uniquement dirigé transversalement à la direction de convoyage 8.

Dans certains modes de réalisation, le moyen d'alimentation 7 comprend un ensemble de navettes 12 circulant sur un rail principal 13 et qui déplacent les produits 3, et le au moins un poussoir 11 est indépendant des navettes 12 et agit sur les produits 3 pour les déplacer jusque sur le tapis 6 lorsque les navettes 12 les ont amenés dans la au moins une zone latérale 9. Un tel poussoir 11 ne suit alors pas le mouvement cyclique complet des navettes 12 et n'est pas embarqué sur elles. Il travaille essentiellement dans la zone latérale 9 et y reste. Il n'accompagne pas les navettes 12 jusqu'au poste amont d'où les produits 3 sont extraits.

Selon une caractéristique additionnelle possible, le au moins un moyen de transfert 10 comprend un jeu de glissières 14 transversales à la direction de convoyage 8, mobiles dans ladite direction et sur lesquelles sont montés les poussoirs 11. Les poussoirs 11 sont donc déplaçables transversalement à la direction de convoyage 8 grâce à des glissières 14 linéaires et permettant un mouvement perpendiculaire à la direction de convoyage 8, ces glissières 14 étant elles-mêmes préférablement déplaçables dans la direction de convoyage 8, de sorte à suivre le mouvement du tapis 6. Par rapport à un bâti fixe, la glissière 14 se déplace donc dans la direction de convoyage 6 au cours du transfert des produits 3 des navettes 12 jusqu'au tapis 6. Les glissières 14 sont ensuite ramenées en position initiale pour le transfert des produits 3 suivants. Les glissières 14 sont ainsi animées d'un mouvement cyclique d'aller et retour le long de la direction de convoyage 8. Les poussoirs 11, sur les glissières 14, se déplacent, par rapport au tapis 6, transversalement à la direction de convoyage 8.

Selon une autre caractéristique possible, le au moins un moyen de transfert 10 repose sur un principe de moteur linéaire et comprend un rail secondaire 15 dans la au moins une zone latérale 9, sur lequel les poussoirs 11 sont montés mobiles. Dans ces réalisations, les poussoirs 11 sont donc déplacés par un principe de moteur linéaire, éventuellement superposé au rail principal 13 du moteur linéaire du moyen d'alimentation 7 amenant les produits 3 au niveau du tapis 6. Un des avantages est alors que le rail secondaire 15 a une forme de boucle fermée, et que le retour d'un poussoir 11 en position initiale se fait sans interférer avec la fonction de transfert depuis les navettes 12 jusqu'au tapis 6. Il est aussi possible de prévoir un plus grand nombre de poussoirs 11, certains d'entre eux étant alors éventuellement en attente.

Dans d'autres modes de réalisation, le moyen d'alimentation 7 comprend un ensemble de navettes 12 circulant sur un rail principal 13 et qui déplacent les produits 3, le au moins un moyen de transfert 10 étant embarqué sur lesdites navettes 12, sous la forme d'un poussoir 11 par navette 12. On évite ainsi de devoir rajouter un système supplémentaire pour le moyen de transfert 10, avec une structure fixe par rapport au bâti. Bien que la construction des navettes 12 est alors plus élaborée et complexe, la synchronisation des vitesses de déplacement entre le tapis 6, les navettes 12 et les poussoirs 11 est plus simple.

Selon une autre caractéristique additionnelle possible, le moyen d'alimentation 7 s'étend au niveau de deux zones latérales 9 que présente le dispositif de conditionnement 1, positionnées, pour l'une, d'un côté du tapis 6, et, pour l'autre, de l'autre côté, de sorte à alimenter les produits 3 sur le tapis 6 depuis chacun de ses deux côtés longitudinaux. Cela est particulièrement compatible avec les situations où les lots 5 sont agencés en plusieurs lignes longitudinales sur le tapis 6. Des lots 5 sont constitués depuis un côté du tapis 6 et depuis l'autre côté, menant ainsi à deux lignes parallèles qui avancent vers le module de conditionnement 4. De façon générale, ce fonctionnement peut aussi être mis en oeuvre depuis des zones latérales 9 qui sont du même côté.

L'invention a aussi pour objet un procédé d'alimentation pour un dispositif de conditionnement 1 de produits 3 comprenant un tapis 6 s'étendant dans une direction de convoyage 8 et alimentant un module de conditionnement 4 en lots 5 de produits 3 à conditionner, procédé comprenant une étape consistant essentiellement à amener jusqu'au tapis 6 lesdits produits 3 depuis un poste en amont à l'aide d'un principe de moteur linéaire grâce auquel les produits 3 sont déplacés à l'aide de navettes 12. Le moyen d'alimentation 7 assure cette étape d'amenée de produits 3.

Selon l'invention, le procédé comprend, comprend, en outre, une étape consistant essentiellement à déposer les produits 3 sur le tapis 6 depuis le côté du tapis 6.

La dépose de produits 3 sur le tapis 6 se fait depuis différents endroits répartis longitudinalement sur le côté du tapis 6, pour contribuer simultanément à former plusieurs lots 5 à chaque fois depuis lesdits endroits.

Le moyen de transfert 10 assure cette étape de dépose. Les premiers produits 3 déposés du lot 5 sont alors ceux qui sont les plus éloignés de la zone latérale 9, les derniers étant ceux les plus proches. Les produits 3 plus proches de la zone latérale 9, transversalement à la direction de convoyage 8, sont déposés depuis des parties de ladite zones latérale 9 plus en aval dans le sens de la direction de convoyage 8. Un lot se forme donc progressivement alors que le tapis 6 le déplace le long de la zone latérale 8 jusqu'au module de conditionnement 4.

Selon une caractéristique additionnelle possible, la dépose des produits 3 sur le tapis 6 suit le mouvement dudit tapis 6 dans la direction de convoyage 8, de sorte que les produits 3 ne subissent, par rapport au tapis 6, qu'un déplacement transversal à la direction de convoyage 8. On évite ainsi des chutes de produits 3. Les poussoirs 11, le tapis 6 et les produits 3 ont donc tous, par rapport à un bâti, la même vitesse dans la direction de convoyage 8.

Selon une autre caractéristique additionnelle possible, plusieurs produits 3 alignés dans la direction de convoyage 8 sont déposés sur le tapis 6 en une seule opération de dépose, notamment le nombre de produits 3 formant une colonne 16 d'un lot 5 dans la direction de convoyage 8. Les lots 5 se forment donc par réception successives, au cours de leur mouvement grâce au tapis 6, de leurs colonnes 16 constitutives.

Enfin, selon une autre caractéristique additionnelle possible, le module de conditionnement 4 traite les produits 3 sous forme de lot 5 de produits 3 agencés en colonnes 16 dans la direction de convoyage 8 et en rangées 24 transversales, les produits 3 d'une même colonne 16 étant déposés simultanément et les colonnes 16 d'un même lot 5 étant déposées les unes après les autres, chaque fois depuis un autre endroit plus en aval.

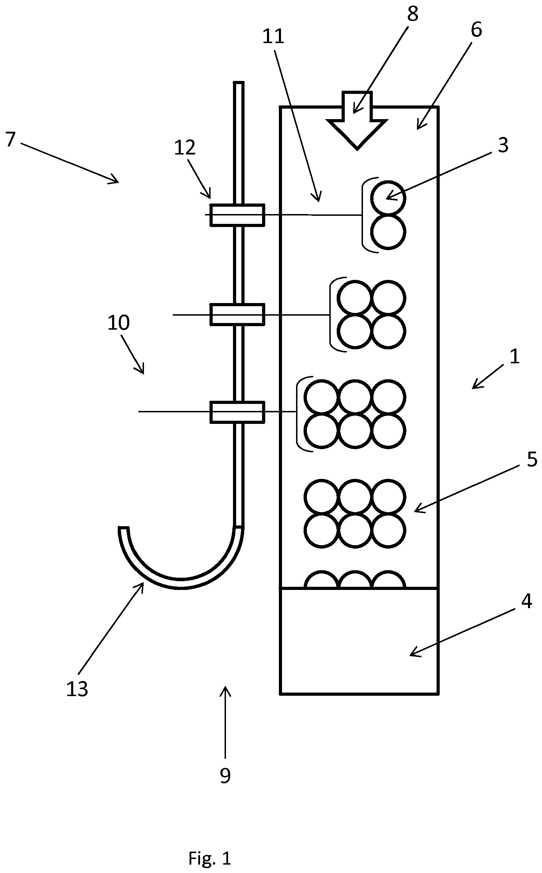

La figure 1 illustre un cycle possible de constitution de trois lots 5. Dans cette figure, les produits 3 circulent du haut vers le bas, vers le module de conditionnement 4. Le moyen d'alimentation 7 utilise un principe de moteur linéaire, entraînant des navettes 12 de façon magnétique, muni, d'une part, d'un rail principal 13 s'étendant notamment contre le tapis 6 d'alimentation, à sa hauteur, et, d'autre part, d'un ensemble de navettes 12 qui circulent sur ledit rail. Les produits 3 sont chacun embarqués sur une navette 12. Les produits 3 sont ensuite translatés sur le tapis 6, transversalement à la direction de convoyage 8 à l'aide du moyen de transfert 10 à base de poussoirs 11, depuis une zone où le rail principal 13 s'étend contre le tapis 6 parallèlement à la direction de convoyage 8.

Les lots 5 traités dans cet exemple illustratif sont de deux produits 3 dans la direction de convoyage 8, et de trois produits transversalement à cette direction. Un lot 5 contient trois colonnes 16 longitudinales de deux produits 3 chacune, ou encore deux rangées 24 transversales de trois produits 3 chacune. Le moyen d'alimentation 7 contribue simultanément à la formation de trois lots 5, puisqu'il dépose, depuis différents endroits répartis le long de la direction de convoyage 8, des produits 3 formant à chaque fois des colonnes 16 différentes. Chaque colonne 16 d'un lot 5 est normalement déposée depuis un endroit différent, pour augmenter le nombre de lots 5 formés à chaque cycle.

Dans l'exemple de la figure 1, la zone latérale 9 peut être considérée comme essentiellement constituée de trois portions différentes, chacune associée à une colonne 16 de produits 3 à déposer. La portion la plus en amont par rapport au flux, et donc la plus en haut dans la figure 1, est dédiée à la dépose de la colonne 16 de produits 3 dans le lot 5 qui est la plus éloignée du rail principal 13, ou colonne de rang « un ». Un poussoir 11 devant amener les produits 3 jusque cette position se déplace donc de la plus grande amplitude par rapport aux suivants. La portion suivante dans le sens du flux est dédiée à la dépose de la colonne 16 suivante, ou colonne de rang « deux ». La portion de dépose suivante est dédiée à la dépose de la colonne 16 suivante, ou colonne de rang « trois ». Un lot 5 est donc formé progressivement, au fil de son avance sous l'effet du tapis 6.

On comprend aussi qu'en alimentant les produits 3 depuis le côté du tapis 6, le moyen d'alimentation 7 contribue en permanence à la formation simultanée de plusieurs lots 5, chaque lot 5 étant complété progressivement au fil de son déplacement par le tapis 6, avec des produits 3 qui sont amenés depuis différents endroits répartis au fil de l'avance du tapis 6. Dans le cas de la figure 1, le moyen d'alimentation 7 traite simultanément trois lots 5, en apportant au cours d'un même cycle, et éventuellement simultanément, la colonne 16 de rang « un » depuis la portion la plus en amont, la colonne 16 de rang « deux » depuis une portion latérale plus en aval, et la colonne 16 de rang « trois » depuis la portion la plus en aval.

De façon générale, les différents éléments constitutifs de chaque lot 5 sont apportés depuis différents endroits répartis dans la direction de convoyage 8, ce qui permet au moyen d'alimentation 7 de traiter plusieurs lots 5 en parallèle à différents stades et de réduire ainsi le temps de cycle entre deux lots 5.

Les produits 3 sont ainsi entraînés de façon référencée à l'unité, et donc avec une position connue en permanence, depuis le poste en amont qui délivre les produits 3, jusqu'au tapis 6 du dispositif de conditionnement 1. Le moyen d'alimentation 7 utilise des navettes 12 circulant sur un rail principal 13 pour recevoir les produits 3 au niveau du poste en amont et les amener audit tapis 6. Pour être transférés sur la surface du tapis 6 qui va poursuivre leur avance jusqu'au module de conditionnement 4, le moyen d'alimentation 7 est aussi muni d'un moyen de transfert 10, qui va pousser les produits hors des navettes 12 et jusque sur le tapis 6. Bien entendu, une navette 12 peut être conçue pour recevoir un ou plusieurs produits 3.

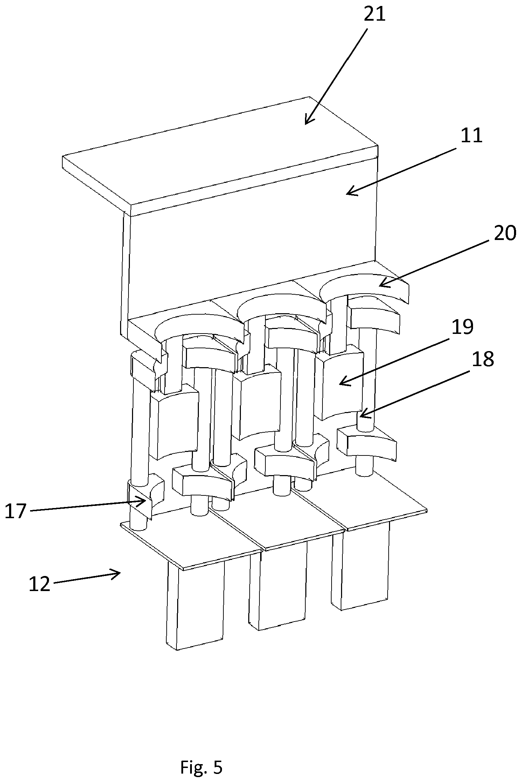

La figure 5 représente une configuration possible pour la coopération entre le moyen de transfert 10 et les navettes 12. Chaque navette 12 est ainsi préférablement munie d'une forme complémentaire à celle des produits 3, pour pouvoir les emmener le long du rail principal 13, de façon stable. La figure 5 montre par exemple que la navette reçoit un produit 3 au niveau d'une surface d'accueil plane dont elle est pourvue et qui est sensiblement parallèle à la surface du tapis 6 et au même niveau. La navette 12 présente aussi deux moyens de butée, lesdits moyens étant espacés verticalement d'une distance compatible avec un bon maintien des produits 3, chaque moyen présentant deux guides 17 en vis-à-vis, dans la direction dans laquelle s'étend le rail principal 13. Le produit 3 est donc maintenu dans la navette 12 grâce à ces quatre guides 17, de forme complémentaire au contour extérieur du produit 3 et réparti, d'une part, verticalement, et, d'autre part, à l'avant et à l'arrière du produit 3 à entraîner. Les deux guides 17 du même côté du produit 3 sont montés sur un pilier 18. On obtient ainsi une structure avec deux piliers 18 séparés, portant chacun l'un des guides 17 d'un des moyens de butées.

Un poussoir 11 du moyen de transfert 10 peut alors aisément circuler entre ces deux piliers 18. Comme le montre la figure 5, le poussoir 11 peut alors présenter une patte 19 destinée à agir entre les deux moyens de butée, et se trouvant initialement entre les deux piliers 18. Le poussoir 11 comprend aussi, pour chaque produit 3 à transférer, un contre-col 20 qui vient agir sur une partie supérieure du produit 3. Sous l'effet du poussoir 11, le produit 3 est alors déplacé vers le tapis 6, transversalement à la direction de convoyage 8, sous l'action, d'une part, d'une patte 19 et d'un contre-col 20. Les capacités, en termes de produit 3, du poussoir 11, d'une part, et des navettes 12, d'autre part, peuvent être différentes, unitaire ou multiple. Par exemple, le poussoir 11 peut transférer plusieurs produits 3 simultanément, alors que la navette 12 peut ne déplacer qu'un seul produit 3 à chaque fois. Il est alors nécessaire de bien positionner les unes par rapport aux autres les navettes 12 convoyant les produits 3 qui seront traités par le même poussoir 11. Cette configuration est par exemple illustrée en figure 5. De façon générale, la navette 12 véhicule au moins un produit 3, le poussoir 11 transfert au moins un produit 3, la navette 12 et le poussoir 11 pouvant traiter un nombre différent de produits 3.

En outre, de façon générale, pour le maintien du produit 3, les navettes 12 ont une forme suffisamment complémentaire au produit 3 pour le retenir et l'entraîner, et le nombre et la position des moyens de butées ou guides correspondants peuvent être différents d'une réalisation à l'autre. Le poussoir 11 associé a toutefois une forme complémentaire à la navette 12 pour que le produit 3 soit successivement en contact avec la navette 12 puis le poussoir 11.

Le moyen de transfert 10 assure donc le mouvement des produits 3, depuis la zone latérale 9 et jusque sur le tapis 6, transversalement à direction de convoyage 8. Le moyen de transfert 10 pousse donc les produits 3 pour qu'ils quittent les navettes 12 et soient accueillis sur le tapis 6 pour former un lot 5 et continuer jusqu'au module de conditionnement 4.

Préférablement, lors du passage des navettes 12 au tapis 6, les produits 3 subissent, par rapport au tapis 6, un mouvement qui est perpendiculaire à la direction de convoyage 8. La navette 12, au moins lorsque le au moins un produit 3 poussé par le moyen de transfert 10, a donc une vitesse, dans la direction de convoyage 8, qui est la même que celle du tapis 6, par rapport à un point fixe. La vitesse des navettes 12 avant ou après la dépose des produits 3 peut bien sûr être différente, les navettes 12 pouvant donc être mobiles l'une par rapport à l'autre. En assurant un suivi en position entre, d'une part, la navette 12 qui amène en zone latérale 9 au moins un produit 3, et, d'autre part, le tapis 6, on limite les risques de chute de produits 3 lors du passage de l'une à l'autre. Le dispositif de conditionnement 1 est ainsi préférablement muni d'une unité de contrôle qui gère de façon coordonnée le mouvement des navettes 12 et le mouvement du tapis 6.

En outre, pour un bon transfert, la surface d'accueil des navettes 12 est préférablement à la même hauteur que le tapis 6 et l'espace entre ces deux éléments est minimum, voire nul.

Le moyen de transfert 10 peut être réalisé de différentes façons. Ainsi, dans des premières variantes, le moyen de transfert 10 est embarqué sur les navettes 12 directement. Chaque navette 12 est alors munie d'un poussoir 11 qui agit pour décaler le au moins un produit 3 convoyé par la navette 12 depuis sa surface d'accueil jusque sur le tapis 6. Après le transfert, le poussoir 11 s'escamote à nouveau, pour que la navette 12 puisse recevoir un produit 3 pour le cycle suivant. La navette 12, qui vient chercher les produits 3 au niveau du poste amont, embarque donc elle-même un actionneur qui vient agir sur le au moins un produit 3 récupéré par ladite navette 12.

Ce genre de réalisations présente l'avantage de ne nécessiter l'implantation que d'un seul circuit à base de moteur linéaire et donc aussi un seul contrôle pour assurer la prise des produits 3 en amont, leur déplacement vers le tapis 6, puis le transfert sur le tapis 6.

Cependant, afin de réduire le coût associé à un grand nombre de navettes 12 embarquant chacune un poussoir 11, il est envisageable de réaliser la fonction de transfert avec un moyen de transfert 10 indépendant des navettes 12. Un tel moyen de transfert 10 vient donc suivre le mouvement des navettes 12, alors qu'elles se trouvent dans la zone latérale 9, pour agir sur les produits 3 qu'elles transportent. Les navettes 12 sont ainsi dédiées à récupérer les produits 3 au poste en amont et les amener en zone latérale 9, au niveau des différentes portion de ladite zone à partir desquelles les produits 3 sont poussés sur le tapis 6 transversalement à la direction de convoyage 8, alors qu'un moyen de transfert 10, additionnel, évoluant aussi au moins dans la zone latérale 9, est dédié au transfert des produits 3 depuis les navettes 12 jusque sur le tapis 6, à la position souhaitée.

Un tel moyen de transfert 10 se trouve, par rapport au tapis 6, du même côté que la zone latérale 9, ce qui permet en particulier d'éviter d'interférer avec les produits 3 déjà déposés sur le tapis 6.

Le moyen de transfert 10 comprend alors des poussoirs 11 mobiles, qui suivent le mouvement des navettes 12 en zone latérale 9. Les poussoirs 11 du moyen de transfert 10 suivent donc le mouvement d'avance du tapis 6 dans la direction de convoyage 8, et il en est éventuellement de même pour les navettes 12. Au moins les poussoirs 11 du moyen de transfert 10 suivent le déplacement du tapis 6.

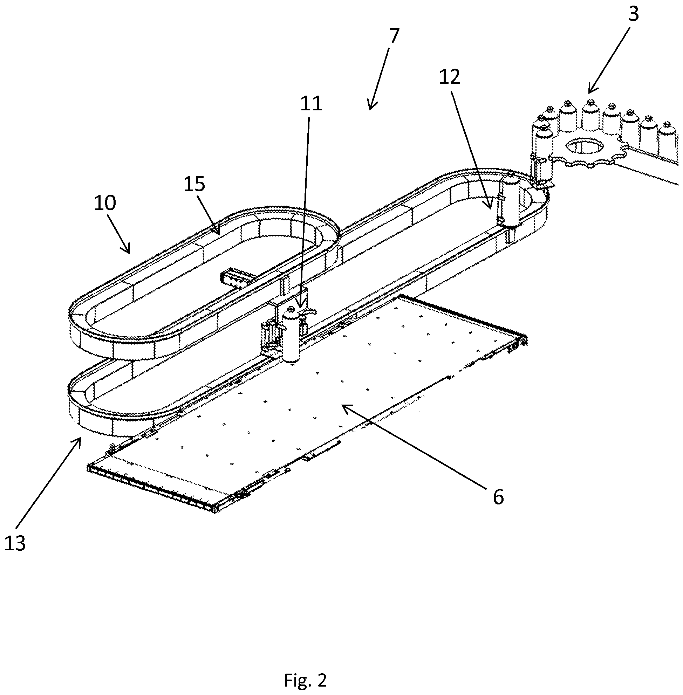

La figure 2 montre une réalisation possible d'un moyen de transfert 10, qui repose lui aussi sur un principe de moteur linéaire. Ce moyen de transfert 10 présente alors, d'une part, un rail secondaire 15, évoluant au moins en partie dans la zone latérale 9, et, d'autre part, au moins un chariot 21 embarquant au moins un poussoir 11. Compte tenu de la complémentarité de formes entre, d'une part, le poussoir 11 et, d'autre part, la navette 12, le chariot 21 et la navette 12 dont il vient pousser les produits 3 ont une vitesse au moins momentanément égale.

Le chariot 21 embarque ainsi un actionneur 22 du type vérin, qui vient pousser une platine de butée pour faire passer le produit 3 de la navette 12 jusqu'au tapis 6. La navette 12 présente en effet une configuration ouverte du côté du tapis 6 lorsqu'elle se trouve en face de lui, et vient présenter ce même côté lors de la récolte des produits 3 au poste en amont.

L'actionneur 22 est donc rétracté avant que le chariot 21 qui le porte arrive au niveau de la navette 12 dont il doit dégager le au moins un produit 3. Lorsque les deux sont en vis-à-vis, l'actionneur 22 entre en fonction et s'étend, pour pousser transversalement les produits 3 sur le tapis 6, puis il se rétracte à nouveau. Le chariot 21 peut alors revenir en position soit en continuant son mouvement le long d'un rail secondaire en boucle fermée, soit en faisant marche arrière. Il est envisageable qu'un même chariot 21 assure le transfert des produits 3 vers le tapis 6 depuis plusieurs portions de la zone latérale 9 qui sont réparties le long de la direction de convoyage 8. Par exemple, le chariot 21 peut transférer des produits 3 pour former une colonne 16 d'un rang, puis se positionner en aval et attendre la navette 12 amenant les produits 3 formant la colonne 16 du rang suivant, etc.

Dans des réalisations plus simples, il est aussi envisageable d'aménager un rail secondaire 15 qui présente lui-même un décrochement transversal à la direction de convoyage 8 pour générer le mouvement des produits 3 en direction du tapis 6.

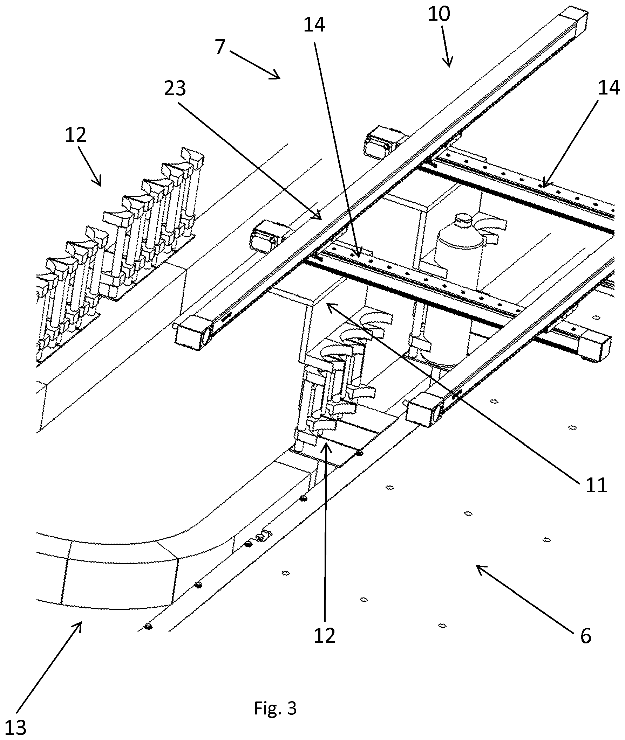

La figure 3 montre une autre réalisation du moyen de transfert 10 dans laquelle les poussoirs 11 prennent la forme d'éléments mobiles montés sur des glissières 14 qui leur permettent un mouvement qui est transversal à la direction de convoyage 8. C'est donc la circulation de ces éléments mobiles le long des glissières 14 qui provoque le transfert des produits 3 depuis la navette 12 jusqu'au tapis 6.

Pour assurer le suivi en position de ces poussoirs 11 par rapport au tapis 6, les glissières 14 sont mobiles dans la direction de convoyage 8, grâce à un cadre 23 s'étendant dans ladite direction et formant lui aussi une glissière. Le cadre 23 est fixe est permet donc aux glissières 14 de se déplacer dans la direction de convoyage 8, en particulier à la même vitesse que le tapis 6. C'est ensuite le déplacement des poussoirs 11 le long des glissières 14, qui assure le transfert des produits 3 depuis les navettes 12 jusqu'au tapis 6.

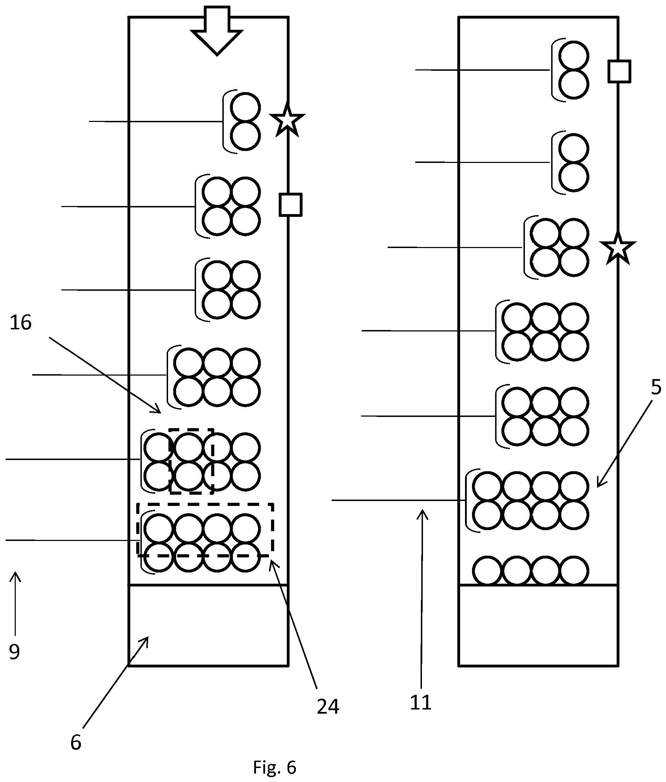

La figure 6 illustre un cycle particulier de création d'un ensemble de lots 5. La configuration représentée dans le schéma de gauche précède celle de droite, le repère en forme d'étoile montrant la progression du tapis 6 entre les deux. La configuration représentée dans le schéma de droite précède donc aussi celle de gauche, avec le repère en forme de carré montrant la progression du tapis 6 entre elles. Dans la configuration de gauche, une colonne 16 de produit 3 est apportée pour le rang « un », pour le lot 5 le plus en amont, pour le rang « deux » des deux lots 5 suivants, puis pour le rang suivant dans chacun des deux lots 5 en aval. Deux lots 5 sont ainsi complétés par chacun une colonne 16 de même rang, à savoir le rang « deux » pour les deuxièmes et troisième lots 5.

Dans l'étape suivante, à droite de la figure 6, ce sont le premier lot 5 et le deuxième lot 5 qui reçoivent la colonne 16 de même rang, à savoir celle de rang « un », ainsi que les quatrième et cinquième lot 5 qui reçoivent à leur tour la colonne 16 de rang « trois ». Ces deux lots 5 ont en effet reçu, au cours du cycle de dépose précédent, chacun une colonne 16 du rang « deux ». Les autres lots 5 reçoivent chacun la colonne 16 du premier rang manquant en direction de la zone latérale 9.

De façon générale, le moyen d'alimentation 7 organise donc de façon cyclique l'élaboration simultanée d'un groupe de lots 6 depuis une zone latérale 9, une partie différente du lot 6, colonne 16 préférablement, mais éventuellement aussi rangée 24, étant apportée à chaque fois depuis une partie différente de la zone latérale 9, lesdites parties étant réparties dans la direction de convoyage 8. Ce faisant, des lots 6 différents, à différents stades de complétude, peuvent être traités simultanément depuis des parties de zone latérale 9 différentes.

Pour améliorer la cadence, ce principe peut être reproduit à plusieurs endroits du tapis 6, de sorte que ce dernier est alimenté en produits 3 depuis plusieurs zones latérales 9 le long du tapis, à partir desquelles, pour chacune, plusieurs lots 5 sont fabriqués en parallèle. Par exemple, dans des formes de réalisation avantageuses, le moyen d'alimentation 7 fournit les produits 3 depuis les deux côtés du tapis 6 simultanément. Ainsi, le rail principal 13 s'étend dans une zone qui se situe d'un côté du tapis 6, le même ou un autre rail s'étendant de l'autre côté. Le tapis 6 reçoit alors les produits 3 qui formeront les lots 5 depuis deux zones latérales 9 séparées par le tapis 6, en vis-à-vis l'une de l'autre.

Le moyen d'alimentation 7 amène donc au cours d'un cycle de dépose des produits 3 destinés à différents lots 5 à différents stades chacun, et ce depuis différents endroits par lesquels passe successivement le tapis 6.

Grâce à l'invention, il est ainsi possible d'amener des produits sur un tapis de machine de conditionnement de façon fiable et sûre, tout en respectant un débit de dépose élevé.

Bien que la description ci-dessus se base sur des modes de réalisations particuliers, elle n'est nullement limitative de la portée de l'invention telle que décrite dans les revendications ci-jointes.

## Revendications

1. Dispositif de conditionnement (1) de produits (3), présentant, d'une part, un module de conditionnement (4) dans lequel les produits (3) en lots (5) sont conditionnés, notamment par fardelage ou par encaissage, et, d'autre part, un tapis (6) s'étendant dans une direction de convoyage (8) pour alimenter ledit module en lots (5) de produits (3), le dispositif comprenant, en outre, un moyen d'alimentation (7) qui amène les produits (3) sur le tapis (6) depuis un poste en amont du dispositif de conditionnement (1), et qui s'étend au moins partiellement dans au moins une zone latérale (9) que présente le dispositif de conditionnement (1), à côté du tapis (6), dispositif **caractérisé en ce que** le moyen d'alimentation (7) repose sur un principe de moteur linéaire, et **en ce qu'**à partir de la au moins une zone latérale (9), dépose les produits (3) sur ledit tapis (6) depuis différentes parties de ladite zone réparties le long de la direction de convoyage (8).

2. Dispositif selon la revendication 1, où
le dispositif de conditionnement (1) comprend, en outre, au moins un moyen de transfert (10) avec au moins un poussoir (11) mobile dans la direction de convoyage (8) et agissant transversalement à la direction de convoyage (8) pour déplacer les produits (3) depuis la au moins une zone latérale (9) jusque sur le tapis (6).

3. Dispositif selon la revendication 2, où
le moyen d'alimentation (7) comprend un ensemble de navettes (12) circulant sur un rail principal (13) et qui déplacent les produits (3), et le au moins un poussoir (11) est indépendant des navettes (12) et agit sur les produits (3) pour les déplacer jusque sur le tapis (6) lorsque les navettes (12) les ont amenés dans la au moins une zone latérale (9).

4. Dispositif selon la revendication 3, où
le au moins un moyen de transfert (10) comprend un jeu de glissières (14) transversales à la direction de convoyage (8), mobiles dans ladite direction et sur lesquelles sont montés les poussoirs (11).

5. Dispositif selon la revendication 3, où
le au moins un moyen de transfert (10) repose sur un principe de moteur linéaire et comprend un rail secondaire (15) dans la au moins une zone latérale (9), sur lequel les poussoirs (11) sont montés mobiles.

6. Dispositif selon la revendication 2, où
le moyen d'alimentation (7) comprend un ensemble de navettes (12) circulant sur un rail principal (13) et qui déplacent les produits (3), le au moins un moyen de transfert (10) étant embarqué sur lesdites navettes (12), sous la forme d'un poussoir (11) par navette (12).

7. Dispositif selon l'une quelconque des revendications 1 à 6, **caractérisé en ce que**
le moyen d'alimentation (7) s'étend au niveau de deux zones latérales (9) que présente le dispositif de conditionnement (1), positionnées, pour l'une, d'un côté du tapis (6), et, pour l'autre, de l'autre côté.

8. Procédé d'alimentation pour un dispositif de conditionnement (1) de produits (3) comprenant un tapis (6) s'étendant dans une direction de convoyage (8) et alimentant un module de conditionnement (4) en lots (5) de produits (3) à conditionner, procédé comprenant une étape consistant essentiellement à amener jusqu'au tapis (6) lesdits produits (3) depuis un poste en amont à l'aide d'un principe de moteur linéaire grâce auquel les produits (3) sont déplacés à l'aide de navettes (12), le procédé comprend, en outre, une étape consistant essentiellement à déposer les produits (3) sur le tapis (6) depuis le côté du tapis (6),
et
la dépose de produits (3) sur le tapis (6) se fait depuis différents endroits répartis longitudinalement sur le côté du tapis (6), pour contribuer simultanément à former plusieurs lots (5) à chaque fois depuis lesdits endroits.

9. Procédé selon la revendication 8, où
la dépose des produits (3) sur le tapis (6) suit le mouvement dudit tapis (6) dans la direction de convoyage (8).

10. Procédé selon l'une quelconque des revendications 8 ou 9, où
plusieurs produits (3) alignés dans la direction de convoyage (8) sont déposés sur le tapis (6) en une seule opération de dépose.

11. Procédé selon l'une quelconque des revendications 8 à 10, où
le module de conditionnement (4) traite les produits (3) sous forme de lot (5) de produits (3) agencés en colonnes (16) dans la direction de convoyage (8) et en rangées (24) transversales, les produits (3) d'une même colonne (16) étant déposés simultanément et les colonnes (16) d'un même lot (5) étant déposées les unes après les autres, chaque fois depuis un autre endroit plus en aval.

## Patentansprüche

1. Vorrichtung zur Formung (1) von Produkten (3), umfassend einerseits ein Formungsmodul (4), in dem die Produkte (3) zu Chargen (5) geformt werden, insbesondere durch Bündelung und Verpackung in Kisten, und andererseits ein Förderband (6), das sich in eine Förderrichtung (8) erstreckt, um das Modul mit Chargen (5) von Produkten (3) zu versorgen, wobei die Vorrichtung ferner ein Zuführmittel (7) umfasst, das die Produkte (3) auf dem Förderband (6) von einer stromaufwärtigen Station der Formungsvorrichtung (1) zuführt, und das sich zumindest teilweise in mindestens einer seitlichen Zone (9) erstreckt, die die Formungsvorrichtung (1) neben dem Förderband (6) aufweist,
wobei die Vorrichtung **dadurch gekennzeichnet ist, dass**
das Zuführmittel (7) auf einem linearen Antriebsprinzip beruht, und dass es von der mindestens einen seitlichen Zone (9) die Produkte (3) auf das Förderband (6) von verschiedenen Teilen der Zone, die entlang der Förderrichtung (8) angeordnet sind, auflegt.

2. Vorrichtung nach Anspruch 1, bei der
die Formungsvorrichtung (1) ferner mindestens ein Transfermittel (10) mit mindestens einem in Förderrichtung (8) beweglichen Schieber (11) umfasst, das quer zur Förderrichtung (8) wirkt, um die Produkte (3) von der mindestens einen seitlichen Zone (9) zum Förderband (6) zu verlagern.

3. Vorrichtung nach Anspruch 2, bei der
das Zuführmittel (7) eine Gesamtheit von Schlitten (12) umfasst, die auf einer Hauptschiene (13) umlaufen, und die die Produkte (3) verlagern, und bei der der mindestens eine Schieber (11) von den Schlitten (12) unabhängig ist und auf die Produkte (3) einwirkt, um sie bis auf das Förderband (6) zu verlagern, wenn sie die Schlitten (12) in die mindestens eine seitliche Zone (9) gebracht haben.

4. Vorrichtung nach Anspruch 3, bei der
das mindestens eine Transfermittel (10) einen Satz von zur Förderrichtung (8) quer verlaufenden Gleitschienen (14) umfasst, die in diese Richtung beweglich sind, und auf denen die Schieber (11) montiert sind.

5. Vorrichtung nach Anspruch 3, bei der
das mindestens eine Transfermittel (10) auf einem linearen Antriebsprinzip beruht und eine Nebenschiene (15) in der mindestens einen seitlichen Zone (9) umfasst, auf der die Schieber (11) beweglich montiert sind.

6. Vorrichtung nach Anspruch 2, bei der
das Zuführmittel (7) eine Gesamtheit von Schlitten (12) umfasst, die auf einer Hauptschiene (13) umlaufen, und die die Produkte (3) verlagern, wobei das mindestens eine Transfermittel (10) auf den Schlitten (12) in Form eines Schiebers (11) pro Schlitten (12) installiert ist.

7. Vorrichtung nach einem der Ansprüche 1 bis 6, **dadurch gekennzeichnet, dass**
sich das Zuführmittel (7) im Bereich von zwei seitlichen Zonen (9) erstreckt, die die Formungsvorrichtung (1) aufweist, wobei die eine auf einer Seite des Förderbands (6) und die andere auf der anderen Seite positioniert ist.

8. Versorgungsverfahren für eine Formungsvorrichtung (1) von Produkten (3), umfassend ein Förderband (6), das sich in eine Förderrichtung (8) erstreckt und ein Formungsmodul (4) mit Chargen (5) von zu formenden Produkten (3) versorgt, wobei das Verfahren einen Schritt umfasst, im Wesentlichen darin bestehend, die Produkte (3) von einer stromaufwärtigen Station mit Hilfe eines linearen Antriebsprinzips, dank dessen die Produkte (3) mit Hilfe von Schlitten (12) verlagert werden, bis zum Förderband (6) zu befördern,
wobei das Verfahren ferner einen Schritt umfasst, im Wesentlichen darin bestehend, die Produkte (3) auf das Förderband (6) von der Seite des Förderbandes (6) aufzulegen, und
dass das Auflegen von Produkten (3) auf das Förderband (6) von verschiedenen Stellen aus erfolgt, die in Längsrichtung auf der Seite des Förderbandes (6) verteilt sind, um gleichzeitig dazu beizutragen, jedes Mal von den Stellen aus mehrere Chargen (5) zu bilden.

9. Verfahren nach Anspruch 8, bei dem
das Auflegen der Produkte (3) auf das Förderband (6) auf die Bewegung des Förderbandes (6) in Förderrichtung (8) folgt.

10. Verfahren nach einem der Ansprüche 8 oder 9, bei dem
mehrere in Förderrichtung (8) ausgerichtete Produkte (3) auf das Förderband (6) in einem einzigen Auflegevorgang aufgelegt werden.

11. Verfahren nach einem der Ansprüche 8 bis 10, bei dem
das Formungsmodul (4) die Produkte (3) in Form von Chargen (5) von Produkten (3), die in Säulen (16) in Förderrichtung (8) und in Querreihen (24) angeordnet sind, bearbeitet, wobei die Produkte (3) einer selben Säule (16) gleichzeitig aufgelegt werden, und die Säulen (16) einer selben Charge (5) nacheinander immer von einer anderen am weitesten stromabwärts befindlichen Stelle aufgelegt werden.

## Claims

1. Device for packaging (1) products (3), having, on the one hand, a packaging module (4) in which the products (3) are packaged in batches (5), especially by bundling or by case packing, and, on the other hand, a belt (6) extending in a conveying direction (8) to supply said module with batches (5) of products (3), the device also comprising a supply means (7) that brings the products (3) onto the belt (6) from a station upstream from the packaging device (1), and extends at least partially into at least one lateral zone (9) that the packaging device (1) has, beside the belt (6)
device **characterized in that**
the supply means (7) relies on a linear motor principle,
and **in that** starting from the at least one lateral zone (9), deposits the products (3) on said belt (6) from various parts of said zone that are distributed in the conveying direction (8).

2. Device according to claim 1, where
the packaging device (1) also comprises at least one transfer means (10) with at least one pusher (11) movable in the conveying direction (8) and acting transversely to the conveying direction (8) to move the products (3) from the at least one lateral zone (9) up to the belt (6).

3. Device according to claim 2, where
the supply means (7) comprises a set of shuttles (12) that circulate on a main rail (13) and that move the products (3), and the at least one pusher (11) is independent of the shuttles (12) and acts on the products (3) to move them up to the belt (6) when the shuttles (12) have brought them into the at least one lateral zone (9).

4. Device according to claim 3, where
the at least one transfer means (10) comprises a set of slides (14) that are transverse to the conveying direction (8), movable in said direction and on which the pushers (11) are mounted.

5. Device according to claim 3, where
the at least one transfer means (10) relies on a linear motor principle and comprises a secondary rail (15) in the at least one lateral zone (9), on which the pushers (11) are movably mounted.

6. Device according to claim 2, where
the supply means (7) comprises a set of shuttles (12) that circulate on a main rail (13) and that move the products (3), the at least one transfer means (10) being embedded on said shuttles (12), in the form of one pusher (11) per shuttle (12).

7. Device according to any one of claims 1 to 6, **characterized in that**
the supply means (7) extends in the area of two lateral zones (9) that the packaging device (1) has, one zone being positioned on one side of the belt (6), and the other zone on the other side.

8. Supply method for a device (1) for packaging products (3) comprising a belt (6) extending in a conveying direction (8) and supplying a module (4) for packaging in batches (5) of products (3) to be packaged, method comprising a step essentially consisting in bringing up to the belt (6) said products (3) from an upstream station using a linear motor principle owing to which the products (3) are moved using shuttles (12), the method also comprises a step essentially consisting in depositing the products (3) on the belt (6) from the side of the belt (6), and
the deposite of products (3) on the belt (6) is done from various locations distributed longitudinally on the side of the belt (6), to simultaneously contribute to form several batches (5) each time from said locations.

9. Method according to claim 8, where
the deposite of products (3) on the belt (6) tracks the movement of said belt (6) in the conveying direction (8).

10. Method according to any one of claims 8 to 9, where
several products (3) that are aligned in the conveying direction (8) are deposited on the belt (6) in a single deposition operation.

11. Method according to any one of claims 8 to 10, where
the packaging module (4) handles the products (3) in the form of a batch (5) of products (3) that are arranged in columns (16) in the conveying direction (8) and in transverse rows (24), the products (3) of the same column (16) being deposited simultaneously and the columns (16) of the same batch (5) being deposited one after the other, each time from another location that is further downstream.
